# EUROPEAN PATENT APPLICATION

(11) **EP 4 586 678 A1**
(43) Date of publication of application: **16.07.2025**
(21) Application number: 23870765.7
(22) Date of filing: 26.09.2023
(51) Int. Cl.: H04W 24/10

(54) **STREAM CLASSIFICATION SERVICE-BASED COMMUNICATION METHOD AND APPARATUS**

(30) Priority: 29.09.2022 CN 202211202722
(71) Applicant: Huawei Technologies Co., Ltd., Shenzhen, Guangdong 518129 (CN)
(72) Inventor: HUANG, Guogang, Shenzhen, Guangdong 518129 (CN)
(74) Representative: Gill Jennings & Every LLP
(86) International application number: PCT/CN2023/121318
(87) International publication number: WO 2024/067536

(57) **Abstract**

A stream classification service-based communication method and an apparatus are applied to a wireless local area network system that supports 802.11 series protocols, for example, a next-generation Wi-Fi protocol of IEEE 802.11ax, such as 802.11be, Wi-Fi 7, or EHT, or for another example, a next-generation protocol of 802.11be, Wi-Fi 8, or UHR, and may be further applied to a UWB-based wireless personal area network system, a sensing (sensing) system, and the like. The method includes: A receiving end sends a measurement request, and correspondingly, a transmitting end receives the measurement request, where the measurement request includes an identifier of a stream classification service SCS stream. The transmitting end sends a measurement report, and correspondingly, the receiving end receives the measurement report, where the measurement report includes the identifier of the SCS stream and QoS measurement data of the SCS stream. A feedback granularity of the measurement report is effectively improved.

## Description

This application claims priority to Chinese Patent Application No. 202211202722.6, filed with the China National Intellectual Property Administration on September 29, 2022 and entitled "STREAM CLASSIFICATION SERVICE-BASED COMMUNICATION METHOD AND APPARATUS", which is incorporated herein by reference in its entirety.

### TECHNICAL FIELD

Embodiments of this application relate to the field of communication technologies, and in particular, to a stream classification service-based communication method and an apparatus.

### BACKGROUND

Data traffic rapidly grows with development of the mobile internet and popularization of smart terminals. A wireless local area network (wireless local area network, WLAN) technology with advantages of a high rate and low costs has become one of mainstream mobile broadband access technologies.

The Institute of Electrical and Electronics Engineers (institute of electrical and electronics engineers, IEEE) 802.11 series is a main standard used for the WLAN technology. As users have increasingly high requirements for communication service quality, the IEEE 802.11be standard emerges, and may meet the user requirements in terms of a high throughput, a low jitter, a low delay, and the like. The IEEE 802.11be standard is also referred to as an extremely high throughput (extremely high throughput, EHT) standard. For example, the 802.11be standard may support a stream classification service (stream classification service, SCS) mechanism. Specifically, a station (station, STA) may negotiate a quality of service (quality of service, QoS) parameter of an SCS stream with an associated access point (access point, AP). Further, the STA may transmit data of the SCS stream with a QoS requirement to the associated AP. After the STA sends a medium access control (medium access control) service data unit (MAC service data unit, MSDU), the STA further needs to feed back a measurement report to the AP.

However, a feedback granularity of the measurement report needs to be improved.

### SUMMARY

Embodiments of this application provide a stream classification service-based communication method and an apparatus, to effectively improve a feedback granularity of a measurement report.

According to a first aspect, an embodiment of this application provides a stream classification service-based communication method. The method includes:
receiving a measurement request, where the measurement request includes an identifier of a stream classification service SCS stream; and sending a measurement report, where the measurement report includes the identifier of the SCS stream and quality of service (quality of service, QoS) measurement data of the SCS stream.

In this embodiment of this application, the measurement request and the measurement report include the identifier of the SCS stream, so that both communication parties can effectively learn of the SCS stream for which the measurement request and the measurement report are sent, to effectively improve a feedback granularity of the measurement report. Optionally, a receiving end may effectively optimize QoS of an SCS stream based on QoS that is of the SCS stream and that is indicated by the measurement report, to perform targeted optimization on the QoS of the SCS stream. This not only improves optimization efficiency, but also effectively improves the QoS of the SCS stream.

In a possible implementation, when the receiving end of the measurement report is a multi-link device (multi-link device, MLD), the measurement request includes an MLD medium access control MAC address.

For example, the MLD MAC address may be understood as a receiving end address of a measured MSDU. In this embodiment of this application, when the receiving end of the measurement report is the multi-link device, the receiving end address is set to the MLD MAC address. Correspondingly, a transmitting end sends the MSDU on any link between the transmitting end and the multi-link device. In other words, the transmitting end may select more links to send the MSDU. For example, the transmitting end may send the MSDU on a link with a good channel state, to improve flexibility of sending the MSDU by the transmitting end and increase a throughput.

In a possible implementation, information about an interface between a logic link control (logic link control, LLC) layer and a MAC layer includes the identifier of the SCS stream.

In this embodiment of this application, the interface information includes an SCSID of the SCS stream, so that the transmitting end can effectively learn of an SCSID corresponding to the MSDU sent by the transmitting end, or effectively learn of the SCSID to which the MSDU sent by the transmitting end belongs. This helps the transmitting end collect statistics about the QoS measurement data of the SCS stream and determine whether an MSDU whose delay exceeds a delay bound (delay Bound) needs to be discarded.

In a possible implementation, the method further includes: The transmitting end performs packet discarding based on the identifier of the SCS stream and a QoS requirement of the SCS stream.

In this embodiment of this application, the transmitting end performs packet discarding based on the identifier of the SCS stream and the QoS requirement of the SCS stream, to effectively avoid a case in which sending power consumption is increased and a resource is wasted because the transmitting end continues to send the MSDU after a delay bound is exceeded. Therefore, the interface information includes the SCSID of the MSDU, so that not only sending power can be saved, but also sending resources and receiving resources of the receiving end can be effectively saved.

In a possible implementation, the method further includes: sending an SCS request, where the SCS request includes the identifier of the SCS stream and the QoS requirement of the SCS stream.

In this embodiment of this application, the transmitting end may negotiate QoS with the receiving end by using the SCS request.

In a possible implementation, the QoS requirement includes a delay bound and a MAC service data unit MSDU lifetime.

In a possible implementation, the method further includes: sending a delay status report, where the delay status report indicates remaining time for discard of an MSDU in a transmit queue of a TID corresponding to the SCS stream; and receiving a trigger frame, and sending, based on the trigger frame, a plurality of SCS streams corresponding to the TID.

In this embodiment of this application, the receiving end can learn, based on the remaining time for discard of the MSDU, that the MSDU in the transmit queue of the TID may be discarded by the transmitting end within the remaining time. Therefore, the receiving end can schedule, by using the trigger frame, the transmitting end to send the MSDU in the transmit queue of the TID, to avoid a case in which the transmitting end discards the MSDU because the transmitting end does not send the MSDU in time.

In a possible implementation, the measurement request further includes a traffic identifier (traffic identifier, TID) of the SCS stream, and the TID of the SCS stream is any value from 0 to 7.

It may be understood that the TID may be referred to as a traffic ID, or may be referred to as a traffic identifier, a communication identifier, or the like. This is not limited in this embodiment of this application.

In a possible implementation, the measurement report further includes at least one of first information and second information, the first information indicates a quantity of MSDUs that are successfully sent and acknowledged within the QoS requirement of the SCS stream, and the second information indicates a quantity of discarded MSDUs in the SCS stream.

In this embodiment of this application, statistics on first information and second information of an SCS stream are collected, so that a feedback granularity of a measurement report of the SCS stream can be effectively improved.

According to a second aspect, an embodiment of this application provides a stream classification service-based communication method. The method includes:
sending a measurement request, where the measurement request includes an identifier of a stream classification service SCS; and
receiving a measurement report, where the measurement report includes the identifier of the SCS stream and quality of service QoS measurement data of the SCS stream.

In a possible implementation, when a receiving end of the measurement report is a multi-link device MLD, the measurement request includes an MLD medium access control MAC address.

In a possible implementation, the method further includes: receiving a delay status report, where the delay status report indicates remaining time for discard of an MSDU in a transmit queue of a TID corresponding to the SCS stream; and sending a trigger frame based on the delay status report.

In a possible implementation, the measurement request further includes a traffic identifier TID of the SCS stream, and the traffic identifier TID of the SCS stream is any value from 0 to 7.

In a possible implementation, the measurement report further includes at least one of first information and second information, the first information indicates a quantity of MAC service data units MSDUs that are successfully sent and acknowledged within the QoS requirement of the SCS stream, and the second information indicates a quantity of discarded MSDUs in the SCS stream.

According to a third aspect, an embodiment of this application provides a communication apparatus, configured to perform the method in any one of the first aspect or the possible implementations of the first aspect. The communication apparatus includes units that perform the method in any one of the first aspect or the possible implementations of the first aspect. For example, the communication apparatus may include a processing unit and a transceiver unit.

According to a fourth aspect, an embodiment of this application provides a communication apparatus, configured to perform the method in any one of the second aspect or the possible implementations of the second aspect. The communication apparatus includes units that perform the method in any one of the second aspect or the possible implementations of the second aspect. For example, the communication apparatus may include a processing unit and a transceiver unit.

According to a fifth aspect, an embodiment of this application provides a communication apparatus. The communication apparatus includes a processor, configured to perform the method in any one of the first aspect or the possible implementations of the first aspect. Alternatively, the processor is configured to execute a program stored in a memory. When the program is executed, the method in any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal.

According to a sixth aspect, an embodiment of this application provides a communication apparatus. The communication apparatus includes a processor, configured to perform the method in any one of the second aspect or the possible implementations of the second aspect. Alternatively, the processor is configured to execute a program stored in a memory. When the program is executed, the method in any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal.

According to a seventh aspect, an embodiment of this application provides a communication apparatus. The communication apparatus includes a logic circuit and an interface. The logic circuit is coupled to the interface, and the logic circuit is configured to input a measurement request through the interface and output a measurement report through the interface.

Optionally, the logic circuit is specifically configured to: when the measurement request is input through the interface, parse the measurement request. Optionally, the logic circuit is configured to: determine the measurement report based on the measurement request, and output the measurement report through the interface.

In a possible implementation, the logic circuit is further configured to perform packet discarding based on an identifier of an SCS stream and a QoS requirement of the SCS stream.

In a possible implementation, the interface is further configured to output an SCS request.

Optionally, the logic circuit is further configured to: determine the SCS request, and output the SCS request through the interface.

In a possible implementation, the interface is further configured to: output a delay status report, and input a trigger frame; and the logic circuit is further configured to send, based on the trigger frame, an MSDU in a transmit queue of a TID.

Optionally, the logic circuit is further configured to: determine the delay status report, and output the delay status report through the interface.

It may be understood that the communication apparatus in the seventh aspect may be a chip or an apparatus including a chip. For specific descriptions of the seventh aspect, refer to the first aspect.

According to an eighth aspect, an embodiment of this application provides a communication apparatus. The communication apparatus includes a logic circuit and an interface. The logic circuit is coupled to the interface, and the logic circuit is configured to output a measurement request through the interface. The interface is configured to input a measurement report.

In a possible implementation, the interface is further configured to input a delay status report and output a trigger frame.

In a possible implementation, the interface is further configured to input an SCS request.

It may be understood that the communication apparatus in the eighth aspect may be a chip or an apparatus including a chip. For a specific description of the eighth aspect, refer to the second aspect.

According to a ninth aspect, an embodiment of this application provides a computer-readable storage medium. The computer-readable storage medium is configured to store a computer program. When the computer program is run on a computer, the method in any one of the first aspect or the possible implementations of the first aspect is performed.

According to a tenth aspect, an embodiment of this application provides a computer-readable storage medium. The computer-readable storage medium is configured to store a computer program. When the computer program is run on a computer, the method in any one of the second aspect or the possible implementations of the second aspect is performed.

According to an eleventh aspect, an embodiment of this application provides a computer program product. The computer program product includes a computer program or computer code, and when the computer program product runs on a computer, the method in any one of the first aspect or the possible implementations of the first aspect is performed.

According to a twelfth aspect, an embodiment of this application provides a computer program product. The computer program product includes a computer program or computer code, and when the computer program or the computer code is run on a computer, the method in any one of the second aspect or the possible implementations of the second aspect is performed.

According to a thirteenth aspect, an embodiment of this application provides a computer program. When the computer program is run on a computer, the method in any one of the first aspect or the possible implementations of the first aspect is performed.

According to a fourteenth aspect, an embodiment of this application provides a computer program. When the computer program is run on a computer, the method in any one of the second aspect or the possible implementations of the second aspect is performed.

According to a fifteenth aspect, an embodiment of this application provides a communication system. The communication system includes a transmitting end and a receiving end. The transmitting end is configured to perform the method in any one of the first aspect or the possible implementations of the first aspect, and the receiving end is configured to perform the method in any one of the second aspect or the possible implementations of the second aspect.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a diagram of a connection manner between a multi-link AP and a multi-link STA according to an embodiment of this application;
FIG. 4 is a schematic flowchart of a stream classification service-based communication method according to an embodiment of this application;
FIG. 5a is a diagram of a format of an SCS request according to an embodiment of this application;
FIG. 5b is a diagram of a format of an SCS descriptor element according to an embodiment of this application;
FIG. 5c is a diagram of a format of an SCS response frame according to an embodiment of this application;
FIG. 6a is a diagram of a format of a measurement request according to an embodiment of this application;
FIG. 6b is a diagram of a format of a measurement report according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

To make the objectives, technical solutions, and advantages of this application clearer, this application is further described with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiment" in this specification mean that a specific feature, structure, or characteristic described in combination with the embodiment may be included in at least one embodiment of this application. The phrase shown in various locations in this specification may not necessarily refer to a same embodiment, and is not an independent or optional embodiment exclusive from another embodiment. It may be understood explicitly and implicitly by a person skilled in the art that the embodiments described in this specification may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following items (pieces)" or a similar expression thereof means any combination of these items. For example, at least one (item) of a, b, or c may represent: a, b, c, "a and b", "a and c", "b and c", or "a and b and c".

The technical solutions provided in embodiments of this application may be applied to a WLAN system, for example, Wi-Fi. For example, the method provided in embodiments of this application is applicable to the IEEE 802.11 series protocols such as the 802.11a/b/g protocol, the 802.11n protocol, the 802.11ac protocol, the 802.11ax protocol, the 802.11be protocol, or a next-generation protocol. Examples are not enumerated herein. The technical solutions provided in embodiments of this application may be further applied to a UWB technology-based wireless personal area network (wireless personal area network, WPAN). For example, the method provided in embodiments of this application is applicable to the IEEE 802.15 series protocols such as the 802.15.4a protocol, the 802.15.4z protocol, the 802.15.4ab protocol, or a future generation of UWB WPAN protocol. Examples are not enumerated herein. The technical solutions provided in embodiments of this application may be further applied to various other communication systems, for example, an internet of things (internet of things, IoT) system, a vehicle to X (vehicle to X, V2X) system, and a narrow band internet of things (narrow band internet of things, NB-IoT) system, may be applied to a device in the internet of vehicles, an internet of things node, a sensor, and the like in the internet of things (internet of things, IoT), a smart camera, a smart remote control, and a smart water/electricity meter in a smart home, a sensor in a smart city, and the like, or is further applicable to a long term evolution (long term evolution, LTE) system, a 5th-generation (5th-generation, 5G) communication system, a new communication system emerging in future communication development, and the like.

Although embodiments of this application mainly use a WLAN as an example for description, especially a network applied to IEEE 802.11 series standards, for example, a system supporting Wi-Fi 7 that may also be referred to as extremely high throughput (extremely high throughput, EHT), and for another example, a system supporting Wi-Fi 8 that may also be referred to as ultra high reliability (ultra high reliability, UHR) or ultra high reliability and throughput (ultra high reliability and throughput, UHRT). A person skilled in the art easily understands that various aspects in embodiments of this application may be extended to other networks using various standards or protocols, for example, Bluetooth (Bluetooth), a high performance radio LAN (high performance radio LAN, HIPERLAN) (a wireless standard similar to the IEEE 802.11 standard, and is mainly used in Europe), a wide area network (WAN), or another network known or developed in the future. Therefore, regardless of a used coverage area and a used wireless access protocol, the various aspects provided in embodiments of this application are applicable to any appropriate wireless network.

The method provided in embodiments of this application may be implemented by a communication apparatus in a wireless communication system. For example, the communication apparatus may be an access point (access point, AP) or a station (station, STA).

The access point is an apparatus having a wireless communication function, supports communication or sensing by using a WLAN protocol, and has a function of communicating with or sensing another device (for example, a station or another access point) in a WLAN network. Certainly, the access point may further have a function of communicating with or sensing another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus with a wireless communication function may be an entire device, or may be a chip or a processing system installed in an entire device. The device in which the chip or the processing system is installed may implement a method and a function in embodiments of this application under control of the chip or the processing system. The AP in embodiments of this application is an apparatus that provides a service for the STA, and may support the 802.11 series protocols, a subsequent protocol, or the like. For example, the access point may be an access point for a terminal (for example, a mobile phone) to access a wired (or wireless) network, and is mainly deployed at home, inside a building, and inside a campus. A typical coverage radius is tens of meters to hundreds of meters. Certainly, the access point may alternatively be deployed outdoors. For another example, the AP may be a communication entity such as a communication server, a router, a switch, or a network bridge. The AP may include various forms of macro base stations, micro base stations, relay stations, and the like. Certainly, the AP may alternatively be a chip and a processing system in these various forms of devices, to implement the methods and the functions in embodiments of this application.

The station is an apparatus having a wireless communication function, supports communication or sensing by using the WLAN protocol, and has a capability of communicating with or sensing another station or access point in the WLAN network. In the WLAN system, the station may be referred to as a non-access point station (non-access point station, non-AP STA). For example, the STA is any user communication device that allows a user to communicate with or sense an AP to communicate with the WLAN. The apparatus having a wireless communication function may be an entire device, or may be a chip, a processing system, or the like installed on an entire device. A device on which these chips or processing systems are installed may implement the methods and functions in embodiments of this application under control of the chips or the processing systems. For example, the station may be a wireless communication chip, a wireless sensor, or a wireless communication terminal; and may also be referred to as a user. For another example, the station may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function.

The WLAN system can provide high-rate and low-latency transmission. With continuous evolution of WLAN application scenarios, the WLAN system is to be applied to more scenarios or industries, for example, the internet of things industry, the vehicle to X industry, the banking industry, enterprise offices, stadiums and exhibition halls, concert halls, hotel rooms, dormitories, wards, classrooms, shopping malls and supermarkets, squares, streets, workshops, and warehouses. Certainly, a device (for example, an access point or a station) that supports WLAN communication or sensing may be a sensor node (for example, a smart water meter, a smart electricity meter, or a smart air detection node) in a smart city, a smart device in a smart home (for example, a smart camera, a projector, a display, a television, a speaker, a refrigerator, or a washing machine), a node in the Internet of things, an entertainment terminal (for example, a wearable device such as augmented reality (augmented reality, AR) or virtual reality (virtual reality, VR)), a smart device in a smart office (for example, a printer, a projector, a loudspeaker, or a speaker), a vehicle to X device in the vehicle to X, infrastructure in a daily life scenario (for example, a vending machine, a self-service navigation console in a shopping mall or supermarket, a self-service cash register device, or a self-service ordering machine), a device in a large stadium or a music venue, or the like. For example, for example, the access point and the station each may be a device used in the vehicle to X, an Internet of things node or a sensor in the Internet of things, a smart camera, a smart remote control, and a smart water or electricity meter in a smart home, or a sensor in a smart city. Specific forms of the STA and the AP are not limited in embodiments of this application, and are merely examples for description herein.

For example, a communication system to which the method provided in embodiments of this application may be applied may include an access point and a station. For example, embodiments of this application may be applicable to a scenario of communication or sensing between an AP and a STA, between APs, or between STAs in the WLAN. This is not limited in embodiments of this application. Optionally, the AP may communicate with or sense a single STA, or the AP simultaneously communicates with or senses a plurality of STAs. Specifically, communication or sensing between the AP and the plurality of STAs may be further divided into downlink transmission of simultaneously sending signals by the AP to the plurality of STAs and uplink transmission of sending signals by the plurality of STAs to the AP. WLAN communication protocols may be supported between the AP and the STA, between the APs, or between the STAs. The communication protocols may include the IEEE 802.11 series protocols, for example, the 802.11be standard, and certainly, a standard later than 802.11be.

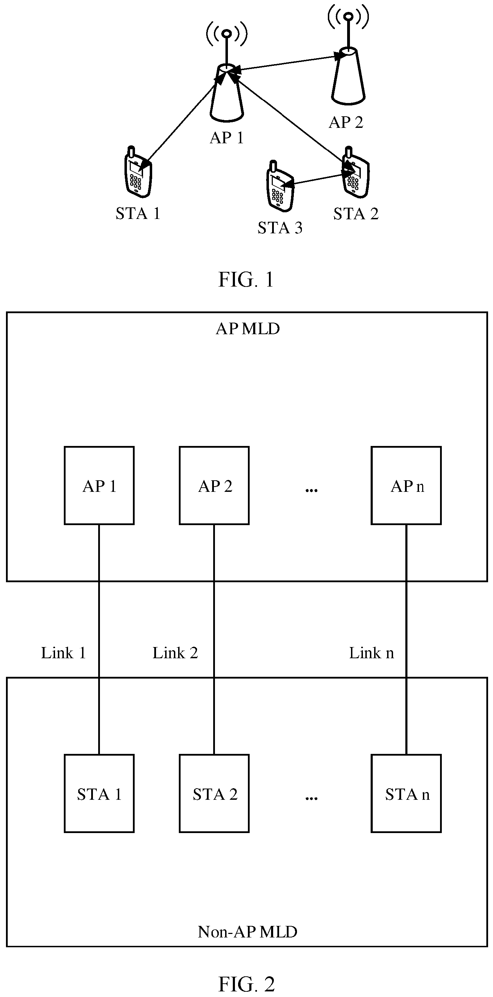

FIG. 1 is a diagram of an architecture of a communication system according to an embodiment of this application. The communication system may include one or more APs and one or more STAs. FIG. 1 shows two access points such as an AP 1 and an AP 2, and three stations such as a STA 1, a STA 2, and a STA 3. It may be understood that the one or more APs may communicate with the one or more STAs. Certainly, the APs may communicate with each other, and the STAs may communicate with each other. The method provided in embodiments of this application is applicable to but is not limited to single-user uplink/downlink transmission, multiuser uplink/downlink transmission, vehicle-to-everything (vehicle-to-everything, V2X, where X may represent everything), and device-to-device (device-to-device, D2D). For example, the V2X may include vehicle to vehicle (vehicle to vehicle, V2V), vehicle to infrastructure (vehicle to infrastructure, V2I), vehicle to pedestrian (vehicle to pedestrian, V2P), or vehicle to network (vehicle to network, V2N) communication.

It can be understood that, in FIG. 1, an example in which the STA is a mobile phone and the AP is a router is used. This does not mean that types of the AP and the STA in embodiments of this application are limited. In addition, FIG. 1 shows only two APs and three STAs as an example. There may be more or less APs or STAs. This is not limited in embodiments of this application.

FIG. 2 is a diagram of an architecture of another communication system according to an embodiment of this application. As shown in FIG. 2, an AP MLD includes an AP 1, an AP 2, ..., and an AP n, and a non-AP MLD includes a STA 1, a STA 2, ..., and a STAn. Herein, n is a positive integer. The AP MLD and the non-AP MLD may perform parallel communication on a link 1, a link 2, ..., and a link n. The STA 1 in the non-AP MLD establishes an association relationship with the AP 1 in the AP MLD. The STA 2 in the non-AP MLD establishes an association relationship with the AP 2 in the AP MLD. The STA n in the non-AP MLD establishes an association relationship with the AP n in the AP MLD. Therefore, one or more STAs in the non-AP MLD and one or more APs in the AP MLD may communicate after establishing an association relationship. Frequency bands in which multi-link devices (including the AP MLD and the non-AP MLD) operate may include but are not limited to sub-1 GHz, 2.4 GHz, 5 GHz, 6 GHz, and high-frequency 60 GHz.

A multi-link device includes one or more affiliated stations. The affiliated station is a logical station, and may work on a link, a frequency band, a channel, or the like. The affiliated station may be an AP or a non-AP STA. For ease of description, in embodiments of this application, a multi-link device whose affiliated station is an AP may be referred to as a multi-link AP, a multi-link AP device, or an AP multi-link device (AP multi-link device, AP MLD), as shown in FIG. 2. A multi-link device whose affiliated station is a non-AP STA is referred to as a multi-link STA, a multi-link STA device, or a STA multi-link device (STA multi-link device), or a multi-link device whose affiliated station is a non-AP STA is referred to as a multi-link non-AP, a multi-link non-AP device, or a non-AP multi-link device (non-AP multi-link device, non-AP MLD), as shown in FIG. 2. The multi-link device (which may be a non-AP MLD or an AP MLD herein) is a communication apparatus having a wireless communication function. The communication apparatus may be an entire device, or may be a chip, a processing system, or the like installed in the entire device. The device in which the chip or the processing system is installed may implement the method and a function in embodiments of this application under control of the chip or the processing system. For descriptions of the AP STA and the non-AP STA, refer to FIG. 1. Details are not described herein again.

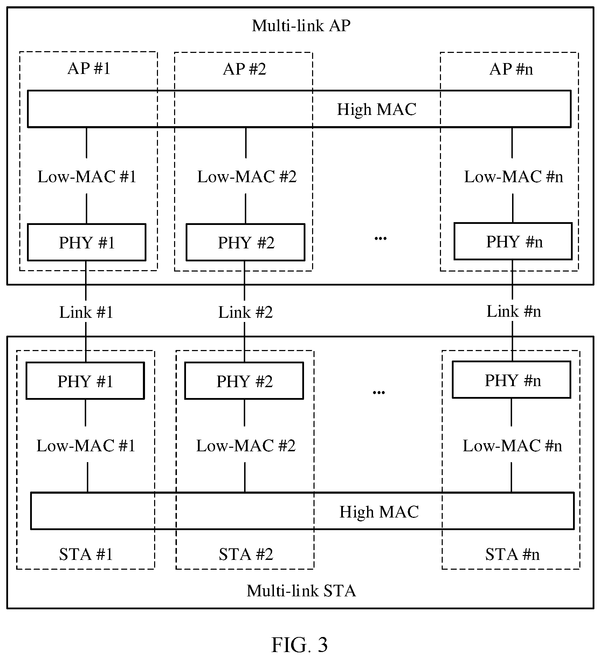

FIG. 3 is a diagram of a connection manner between a multi-link AP and a multi-link STA according to an embodiment of this application.

As shown in FIG. 3, the multi-link AP may include physical layer (physical layer, PHY) processing circuits (a PHY #1, a PHY #2, and a PHY #n shown in FIG. 3) and medium access control (medium access control, MAC) layer processing circuits. The physical layer processing circuit may be configured to process a physical layer signal, and the MAC layer processing circuit may be configured to process a MAC layer signal. Further, a MAC layer may be further divided into one high-MAC (high-MAC) layer (for example, high MAC shown in FIG. 3) and a plurality of low-MAC (low-MAC) layers (for example, low MAC #1, low MAC #2, and low MAC #n shown in FIG. 3). The high-MAC layer is separately connected to the plurality of low-MAC layers. That is, the high-MAC layer is shared by a plurality of links. The high-MAC layer mainly completes allocation, encryption, decryption, and the like of a sequence number (sequence number, SN) and a packet number (packet number, PN) of a MAC service data unit (MAC service data unit, MSDU). The low-MAC layer mainly completes assembly, channel access, packet sending, acknowledgment reception, and the like of a MAC protocol data unit (MAC protocol data unit, MPDU) of a respective link. In FIG. 3, the PHY #1 layer, the low-MAC #1 layer, and the high-MAC layer in the multi-link AP may be considered as an AP #1, the PHY #2 layer, the low-MAC #2 layer, and the high-MAC layer may be considered as an AP#2, ..., and the PHY #n layer, the low-MAC #n layer, and the high-MAC layer may be considered as an AP #n. That is, it may be understood as: The multi-link AP includes N AP entities. A similar situation exists in the multi-link STA. To be specific, a high MAC layer in the multi-link STA is also shared by a plurality of links. A PHY #1 layer, a low-MAC #1 layer, and a high-MAC layer are considered as a STA #1, a PHY #2 layer, a low-MAC #2 layer, and a high-MAC layer are considered as a STA #2, ..., and a PHY #n layer, a low-MAC #n layer, and a high-MAC layer are considered as a STA #n. That is, it may be understood as: The multi-link STA includes N STA entities.

As shown in FIG. 3, the PHY #1 of the AP #1 in the multi-link AP is connected to the PHY #1 of the STA #1 in the multi-link STA, and the AP #1 in the multi-link AP communicates with the STA #1 in the multi-link STA through a link (for example, a link #1 shown in FIG. 3). The PHY #2 of the AP #2 in the multi-link AP is connected to the PHY #2 of the STA #2 in the multi-link STA, and the AP #2 in the multi-link AP communicates with the STA #2 in the multi-link STA through a link (for example, a link #2 shown in FIG. 3). The PHY #n of the AP #n in the multi-link AP is connected to the PHY #n of the STA #n in the multi-link STA, and the AP #n in the multi-link AP communicates with the STA #n in the multi-link STA through a link (for example, a link #n shown in FIG. 3).

It should be noted that FIG. 3 is merely a simple diagram, and does not constitute any limitation on the protection scope of embodiments of this application.

A TID can correspond to different traffic streams (traffic Stream, TS). For example, a length of the TID is 4 bits, and a value range is 0 to 15. A TID 8 to a TID 15 may indicate a traffic stream having a QoS parameter requirement. For example, in an enhanced distributed channel access (enhanced distributed channel access, EDCA) scenario, TIDs may be mapped to user priorities (user priority) 0 to 7. User priorities corresponding to a TID 0 to a TID 7 may be sequentially 0 to 7. For each TID in the TID 0 to the TID 7, a plurality of traffic streams are allowed to map to one TID. For each TID in the TID 8 to the TID 15, only one traffic stream is usually allowed to map to one TID. It may be understood that a specific traffic stream mapped to one TID is not limited in embodiments of this application.

It should be noted that when a plurality of traffic streams are mapped to one TID, whether QoS requirements of the plurality of traffic streams are the same is not limited in embodiments of this application.

Generally, allocation of a sequence number (sequence number, SN) and establishment of a block acknowledgement (block ACK, BA) are based on a TID. Therefore, for traffic of a same TID, a transmitting end usually sends MSDUs according to an SN sequence. In other words, to-be-transmitted MSDUs in a transmit queue of a TID are sent one by one according to an SN sequence. When the MSDUs are sent according to the SN sequence, traffic stream identifiers corresponding to the MSDUs may be the same or may be different. For example, when a plurality of traffic streams are mapped to a same TID, traffic stream identifiers corresponding to MSDUs in a transmit queue of the TID may be different identifiers. Alternatively, it may be understood as: The transmit queue of the TID includes MSDUs of a plurality of different traffic stream identifiers.

It may be understood that the length of the TID in embodiments of this application is merely an example. As a standard develops, the length of the TID may be longer or shorter. This is not limited in embodiments of this application. It should be noted that, as long as a value range of a TID can allow a plurality of traffic streams to be mapped to one TID, it falls within the protection scope of embodiments of this application. For ease of description, the following describes the method provided in embodiments of this application by using an example in which a length of a TID is 4 bits and a length of a stream classification service identifier (SCSID) of a traffic stream is 1 octet. The length 1 octet of the SCSID, and the length 4 bits of the TID are merely examples, and should not be construed as limitations on embodiments of this application.

It may be understood that a traffic stream identifier in embodiments of this application is described by using an SCSID as an example, but this should not be construed as a limitation on embodiments of this application. The SCSID is described by using an example in which identifiers in an SCS request and an SCS response are consistent. However, embodiments of this application may not be limited thereto. For example, the traffic stream identifier may be another ID, and the another ID may have a correspondence with the SCSID in the SCS request and the SCS response.

Currently, when sending a measurement report, the transmitting end feeds back the measurement report at a granularity of TID. However, one TID (for example, the TID 0 to the TID 7) may correspond to a plurality of traffic streams. Therefore, in this manner, a receiving end of the measurement report cannot obtain QoS measurement data of a specific traffic stream for which the measurement report is intended.

In view of this, embodiments of this application provide a stream classification service-based communication method and an apparatus, so that when sending the measurement report, the transmitting end can perform feedback at a granularity of SCS stream, to improve precision of feeding back QoS measurement data.

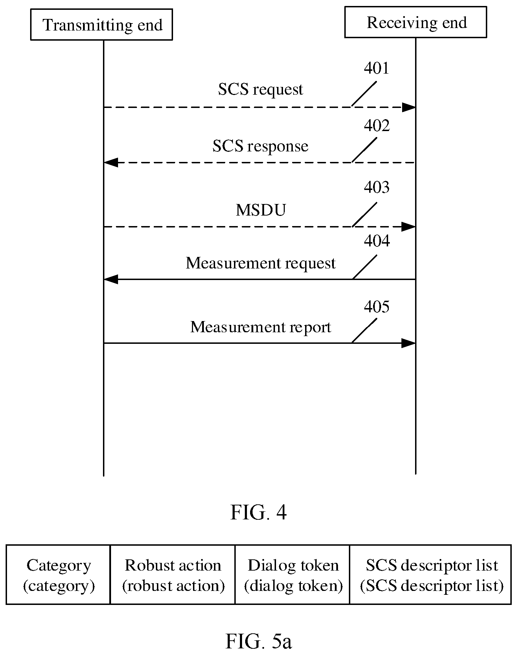

FIG. 4 is a schematic flowchart of a stream classification service-based communication method according to an embodiment of this application. The method may be applied to the communication system shown in FIG. 1, FIG. 2, or FIG. 3. The method may be applied to a transmitting end and a receiving end. The transmitting end may be understood as a communication apparatus that sends a measurement report, a communication apparatus that sends an SCS stream, or a communication apparatus that sends an SCS request. The receiving end may be understood as a communication apparatus that receives a measurement report, a communication apparatus that receives an SCS stream, or a communication apparatus that receives an SCS request. For example, the transmitting end may include a STA (including a non-AP MLD), and the receiving end may include an AP (including an AP MLD). For another example, both the transmitting end and the receiving end are STAs or APs. Whether there is another forwarding apparatus between the transmitting end and the receiving end is not limited in this embodiment of this application. For ease of description, the following uses an example in which the transmitting end is a STA and the receiving end is an AP.

In a possible implementation, the method shown in FIG. 4 includes step 403.

403: The transmitting end sends an MSDU, and correspondingly, the receiving end receives the MSDU.

For example, when a plurality of traffic streams are mapped to a same TID, a transmit queue that is of the transmitting end and that corresponds to a TID may include a plurality of traffic streams. Alternatively, it may be understood as: The transmit queue of the transmitting end may include MSDUs of a plurality of traffic streams corresponding to the TID. It may be understood that when the transmitting end reports a QoS requirement of the traffic stream to the receiving end by using an SCS mechanism, the traffic stream may be referred to as an SCS stream. The MSDU may be understood as a data packet of a traffic stream or an SCS stream. Generally, the traffic stream may include a plurality of MSDUs. A quantity of MSDUs included in the traffic stream is not limited in this embodiment of this application. It may be understood that the MSDU in step 403 may also be collectively referred to as data, a data packet, or the like. A name of the MSDU is not limited in this embodiment of this application.

In a possible implementation, information about an interface between the LLC layer and the MAC layer includes an SCSID. For example, when sending the MSDU through an air interface, the transmitting end may determine, based on an SCSID of the MSDU and the QoS requirement corresponding to the traffic stream, for example, at least one of a delay bound (Delay Bound), an MSDU lifetime (MSDU Lifetime), or minimum remaining time for discard, whether to discard the MSDU. For example, before sending the MSDU through the air interface, the transmitting end may determine the SCSID of the MSDU based on the information about the interface between the LLC layer and the MAC layer.

Generally, the interface information includes a TID. However, in this embodiment of this application, in addition to the TID, the interface information may further include an SCSID of a corresponding traffic stream. The interface information includes the SCSID, so that the transmitting end can effectively learn of the SCSID corresponding to the MSDU sent by the transmitting end, or effectively learn of the SCSID to which the MSDU sent by the transmitting end belongs. This helps the transmitting end collect statistics on QoS measurement data of the traffic stream and determine whether it is necessary to discard an MSDU whose delay exceeds a corresponding delay bound, or determine whether it is necessary to discard an MSDU whose MSDU lifetime expires, or determine whether it is necessary to discard an MSDU whose minimum remaining time for discard expires. For example, for low-delay traffic, the interface information includes the SCSID, so that the transmitting end can effectively measure QoS of the low-delay traffic in time, and the receiving end can perform monitoring based on a QoS measurement report of the low-delay traffic. Therefore, when QoS measurement data of a traffic stream does not meet a specific requirement, the receiving end may take a measure to improve QoS of a user.

The following uses the interface information in this embodiment of this application as an example.

For example, the interface information may include a primitive request between the LLC layer and the MAC layer. The primitive request may transmit an MSDU from a local LLC sublayer entity to a single peer LLC sublayer entity or bride port, or to a plurality of peer LLC sublayer entities or bridge ports in a case of group address (this primitive requests a transfer of an MSDU from a local LLC sublayer entity to a single peer LLC sublayer entity or bride port, or multiple peer LLC sublayer entities or bridge port in the case of group address).

Optionally, the transmitting end may identify a corresponding MSDU based on a traffic filter (TCLAS filter) deployed above the MAC (for example, deployed at the LLC), and map the MSDU to a specified TID and SCSID. The MSDU is then delivered from the LLC layer to the MAC layer through a MAC layer service access point (service access point, MAC-SAP) by using a primitive request (for example, MA-UNITDATA.request primitive).

In an example, when the MSDU belongs to a traffic stream, the transmitting end may map the MSDU to a corresponding SCSID. For example, the SCSID may be a non-zero value. The traffic stream described herein may be understood as an SCS stream corresponding to an SCSID carried when the transmitting end reports a QoS requirement by using an SCS request. Alternatively, the traffic stream herein may be understood as any one of a plurality of traffic streams corresponding to the TID of the MSDU. In another example, when the MSDU does not belong to any traffic stream, the transmitting end may set the SCSID of the MSDU to a reserved value. The reserved value may be 0. In this embodiment of this application, that the MSDU does not belong to any traffic stream may be understood as: The MSDU does not belong to any SCS stream corresponding to the SCSID carried when the transmitting end reports the QoS requirement by using the SCS request; or the MSDU does not belong to any one of the plurality of traffic streams corresponding to the TID of the MSDU. The descriptions of any traffic stream and the descriptions that the MSDU does not belong to any traffic stream are also applicable in the following.

In an example, when a priority of the MSDU is a value from 0 to 7 and the MSDU does not belong to any traffic stream, the transmitting end may set the SCSID of the MSDU to a reserved value, and the reserved value may be 0. In another example, when the priority of the MSDU is a value from 0 to 7 and the MSDU belongs to a traffic stream, the transmitting end may map the MSDU to a corresponding SCSID, for example, a non-zero value. It may be understood that, based on a relationship between a priority and a TID, the priorities 0 to 7 in this embodiment of this application may also be equivalent to TIDs 0 to 7. If the relationship between a priority and a TID changes, the priorities 0 to 7 are not equivalent to the TIDs 0 to 7. In this case, this embodiment of this application further provides the following implementations: In an example, when the TID of the MSDU is a value from 0 to 7 and the MSDU does not belong to any traffic stream, the transmitting end may set the SCSID of the MSDU to a reserved value, and the reserved value may be 0. In another example, when the TID of the MSDU is a value from 0 to 7 and the MSDU belongs to a traffic stream, the transmitting end may map the MSDU to a corresponding SCSID, for example, a non-zero value.

It may be understood that the foregoing is illustrated by using an example in which when TIDs are 0 to 7, a plurality of traffic streams may be mapped to a same TID. A person skilled in the art may understand that, if a length of the TID changes, for example, if a plurality of traffic streams are allowed to map to a same TID when a TID is 0 to 15, the TIDs 0 to 7 or the priorities 0 to 7 in the foregoing method may change accordingly.

For example, a format of the primitive request may be shown as follows:

```
     MA-UNITDATA.request(
                   source address,
                   destination address,
                   routing information,
                   data,
                   priority,
                   SCSID,
                   drop eligible,
                   service class,
                   station vector,
                   MSDU format
     )
```

The source address represents a source address. The destination address represents a destination address. The routing information represents routing information. The data represents data, that is, the MSDU. The priority represents the priority or the TID. The SCSID represents an identifier of a traffic stream (including an SCS stream) corresponding to the MSDU. The drop eligible represents whether to allow drop, and may be set based on a drop eligibility (drop eligibility) field in an intra-access category priority element in an SCS request. The service class represents a service class. The station vector represents a station vector. The MSDU format represents an MSDU format. By using the foregoing primitive request, the transmitting end can learn, based on the SCSID of the MSDU, whether the MSDU belongs to a traffic stream or does not belong to any traffic stream.

It may be understood that the foregoing primitive request is merely an example. In specific implementation, the primitive request may have more or less information than the foregoing information.

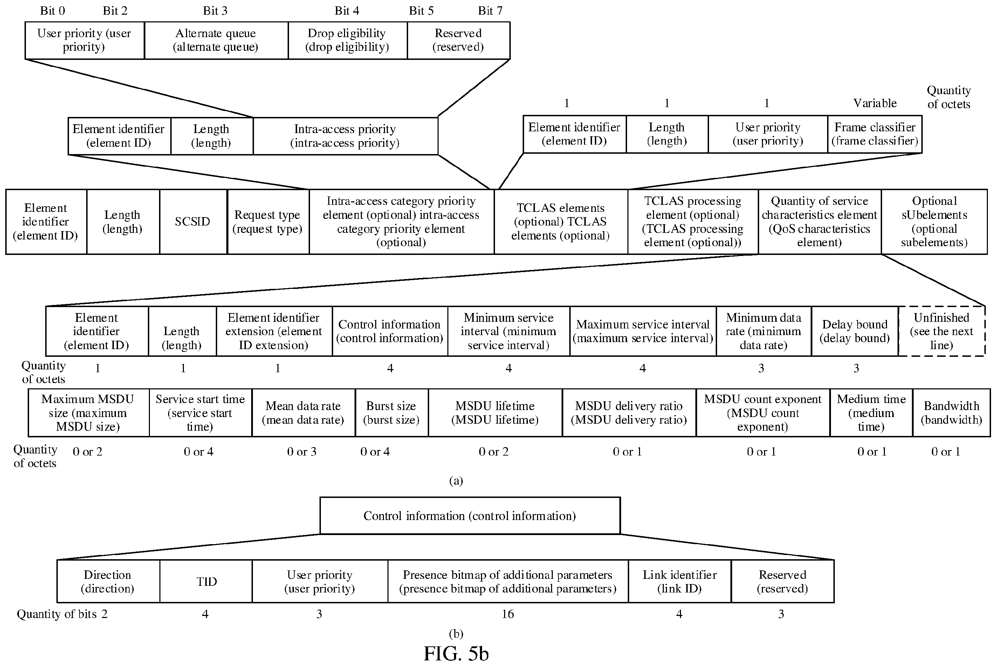

Optionally, the transmitting end may perform packet discarding based on the SCSID and the QoS requirement corresponding to the SCSID. If the MSDU belongs to a traffic stream, the transmitting end may determine whether to discard the MSDU based on the drop eligible (drop eligible) and a QoS requirement of the SCS stream. Packet discarding may be understood as discarding the MSDU, or discarding a data packet by the transmitting end at the MAC layer based on the SCSID and the QoS requirement corresponding to the SCSID. For descriptions of the QoS requirement, refer to FIG. 5b.

It should be noted that the interface information (including the primitive request) in this embodiment of this application may be combined with FIG. 4, or may be an independent embodiment. For example, related descriptions of the interface information in this embodiment of this application may be understood as a method for determining, by the transmitting end based on the interface information, the SCSID of the MSDU sent by the transmitting end, or a method for determining, by the transmitting end based on the interface information, the SCS stream (or the traffic stream) to which the MSDU sent by the transmitting end belongs.

For a manner in which the transmitting end sends the MSDU, this embodiment of this application provides the following two implementations:
Implementation 1:
401: The transmitting end sends the SCS request, and correspondingly, the receiving end receives the SCS request.

For example, the STA may report a low-delay traffic stream to the AP by using the SCS mechanism. The SCS mechanism may be understood as: The STA may send the SCS request (SCS request) to the AP associated with the STA, report the low-delay traffic stream by using the SCS request, and indicate a corresponding QoS requirement (or referred to as a QoS parameter). The SCS request may be referred to as an SCS request frame.

FIG. 5a is a diagram of a format of the SCS request according to an embodiment of this application. As shown in FIG. 5a, the SCS request includes a category (category) field, a robust action (robust action) field, a dialog token (dialog token) field, and an SCS descriptor list (SCS descriptor list) field. For example, the category field may indicate a category to which the action frame (that is, the SCS request frame) belongs. The robust action field may indicate a frame in a corresponding category that the SCS request frame belongs to. The dialog token field may be used to match a corresponding SCS request frame and SCS response frame. The SCS descriptor list field may include one or more SCS descriptor elements, and each SCS descriptor element may indicate related information of an SCS stream. Optionally, when a plurality of SCS streams are mapped to a same TID, the transmitting end may report QoS requirements of the plurality of SCS streams to the receiving end by sending a plurality of SCS requests, or the transmitting end may report the QoS requirements of the plurality of SCS streams to the receiving end by using a plurality of SCS descriptor elements.

FIG. 5b is a diagram of a format of the SCS descriptor element according to an embodiment of this application. For example, the SCS descriptor element may include at least one of the following: an element identifier (element ID) field, a length (length) field, an SCS identifier (SCS identifier, SCSID) field, and a request type (request type) field. Optionally, the SCS descriptor element may further include at least one of the following: an intra-access category priority element (intra-access category priority element), a traffic classification (traffic classification, TCLAS, or may be referred to as communication classification or business classification) element (TCLAS element), a traffic classification processing element (TCLAS processing element), a quality of service characteristics element (service of quality characteristics element), and another optional subelement (optional subelements). In this embodiment of this application, whether the SCS descriptor element includes all the intra-access category priority element, the traffic classification element, the traffic classification processing element, and the quality of service characteristics element, or whether the SCS descriptor element includes none of the intra-access category priority element, the traffic classification element, the traffic classification processing element, and the quality of service characteristics element is not limited.

An indication function of each octet or element is as follows:
(1) The element identifier field identifies the SCS descriptor element.
(2) The length field indicates a length of the SCS descriptor element.
(3) The SCSID field is 1 octet and identifies an SCS stream.
(4) The request type is 1 octet, and indicates a type requested by the SCS request frame. A value and an indication function of the request type may be shown in Table 1.

**Table 1**

| Value of the request type | Indication function |
|---|---|
| 0 | Add (add), that is, add/request to create an SCS stream |
| 1 | Remove (remove), that is, request to remove an SCS stream |
| 2 | Change (change), that is, request to change an SCS stream |

(5) A specific format of the intra-access category priority element is shown in (a) in FIG. 5b, and includes an element identifier (element ID) field, a length (length) field, and an intra-access priority (intra-access priority) field. The intra-access priority field may be 1 octet, and may include at least one of the following: a user priority (user priority) field, an alternative queue (alternate queue) field, a drop eligibility (drop Eligibility) field, and a reserved field.
(6) The TCLAS element indicates how to identify an SCS stream, and the element carries a criterion for determining the SCS stream. The TCLAS element may include at least one of the following: an element identifier (element ID) field, a length (length) field, a user priority (user priority) field, and a frame classifier field.
(7) The TCLAS processing element indicates how to process a plurality of TCLAS elements when the plurality of TCLAS elements exist.
(8) The QoS characteristics element indicates information such as a TID to which a corresponding SCS stream is mapped, and a corresponding QoS parameter. For example, the QoS parameter may include a delay bound (delay bound) and an MSDU delivery ratio (MSDU delivery ratio). The delay bound may indicate a maximum delay allowed by the SCS stream. The MSDU delivery ratio may indicate a required packet delivery ratio under a given delay bound requirement.

In this embodiment of this application, the SCS descriptor element may carry the QoS characteristics element, and the SCS stream corresponding to the SCS descriptor element may be referred to as an SCS stream (SCS stream with parameterized QoS) with parameterized QoS. When the QoS characteristics element is carried, it indicates that the transmitting end has a QoS requirement for the corresponding SCS stream, and needs to negotiate with the receiving end, or the receiving end needs to perform a measure such as optimization and improvement based on QoS measurement data of the SCS stream.

For example, as shown in (a) in FIG. 5b, the QoS characteristics element includes at least one of the following: an element identifier (element ID) field, a length (length) field, an element identifier extension (element ID extension) field, a control information (control information) field, a minimum service interval (minimum service interval) field, a maximum service interval (maximum service interval) field, a minimum data rate (minimum data rate) field, a delay bound (delay bound) field, a maximum MSDU size (maximum MSDU size) field, a service start time (service start time) field, a mean data rate (mean data rate) field, a burst size (burst size) field, an MSDU lifetime (MSDU lifetime) field, an MSDU delivery ratio (MSDU delivery ratio) field, an MSDU count exponent (MSDU count exponent) field, a medium time (medium time) field, and a bandwidth (bandwidth).

For example, as shown in (b) in FIG. 5b, the control information field includes at least one of the following: a direction (direction) field, a traffic identifier (traffic identifier, TID) field, a user priority (user priority) field, a presence bitmap of additional parameters (presence bitmap of additional parameters), a link identifier (link ID) field, and a reserved (reserved) field. Optionally, a TID in the control information may identify a traffic type, and a value of the TID ranges from 0 to 7, and 8 to 15 are reserved values. A value of a user priority ranges from 0 to 7. 0 to 7 indicate user priorities in ascending order. The user priority may be set to a value the same as the TID field.

The QoS requirement of the SCS stream in this embodiment of this application may include the delay bound and the MSDU lifetime shown in FIG. 5b. Optionally, the QoS requirement of the SCS stream may further include a minimum service interval, a maximum service interval, and the like. Examples are not enumerated herein.

402: The receiving end sends an SCS response, and correspondingly, the transmitting end receives the SCS response.

For example, after receiving the SCS request frame, the AP may return an SCS response frame (response), to respond to the SCS request frame, to indicate whether the SCS stream requested in the SCS request frame is accepted. In other words, the STA and the AP associated with the STA may negotiate the QoS parameter by using the SCS request frame and the SCS response frame, so that the STA and the associated AP may transmit the SCS stream with the QoS requirement.

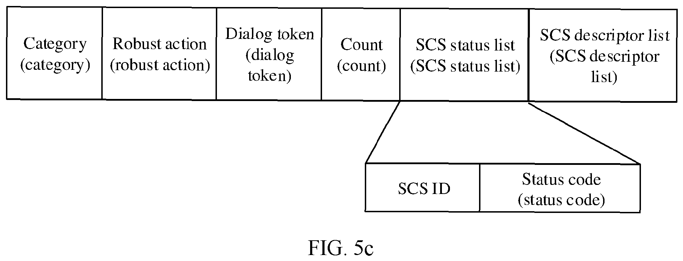

FIG. 5c is a diagram of a format of the SCS response frame according to an embodiment of this application. The SCS response frame includes at least one of the following: a category (category) field, a robust action (robust action) field, a dialog token (dialog token) field, a count (count) field, an SCS status list field, and an SCS descriptor list (SCS descriptor list) field. Content of the dialog token field in the SCS response frame is consistent with content of the dialog token field in the SCS request frame to which the SCS response frame responds. The SCS status list field may include one or more SCS status groups, and each SCS status group may include an SCSID and a status code (status code). The SCSID identifies an SCS stream, and the status code indicates whether the requested SCS stream corresponding to the SCSID is accepted. If the status code indicates that the SCS stream is accepted (accept), a field in the QoS characteristics element indicates parameter information that needs to be used by the SCS stream. That is, the AP agrees with the request of the STA, and the STA needs to perform an operation based on the parameter information carried in the SCS response frame. Optionally, if the status code indicates a reject with suggested changes (reject with suggested changes) parameter, a field in the QoS characteristics element may carry parameter information suggested by the AP, and the STA may re-initiate an SCS request based on the parameter information suggested by the AP; or the STA may send an SCS stream based on the parameter information suggested by the AP. For descriptions of the SCS descriptor element, refer to FIG. 5b.

It should be understood that FIG. 5c is described by using an example in which the SCS status list field includes one SCS status group. This is not limited in this embodiment of this application.

FIG. 4 shows an example in which the transmitting end sends the SCS stream based on the SCS request and the SCS response. However, this should not be construed as a limitation on this embodiment of this application. For example, after the transmitting end receives the SCS response, channel contention may be further performed, and after the channel contention succeeds, the transmitting end sends the SCS stream based on the SCS request and the SCS response.

Implementation 2:
The transmitting end (for example, a non-AP MLD) sends a delay status report, and correspondingly, the receiving end (for example, an AP MLD) receives the delay status report. The receiving end (for example, the AP MLD) may send a trigger frame to the transmitting end based on the delay status report, to schedule transmission of the transmitting end. Correspondingly, the transmitting end (for example, the non-AP MLD) receives the trigger frame, and sends, based on the trigger frame, the MSDU in the transmit queue of the TID.

Optionally, the delay status report indicates remaining time for discard of the MSDU in the transmit queue of the corresponding TID. In other words, the delay status report may indicate a delay requirement of the MSDU in the transmit queue of the TID. For example, the delay status report may be carried in an aggregated control (aggregated control, A-control) field, and remaining time for discard of an MSDU in a transmit queue of a TID of the transmitting end is reported by using the A-control field. For example, the remaining time for discard of the MSDU may include minimum remaining time for discard (or referred to as minimum remaining time for discard or earliest remaining time for discard) (minimum remaining time for discard) of the MSDU. In this way, the receiving end can learn, based on the minimum remaining time for discard of the MSDU, that the MSDU in the transmit queue of the TID may be discarded by the transmitting end within the remaining time. In this way, the receiving end can schedule, by using the trigger frame, the transmitting end to send the MSDU in the transmit queue of the TID. Certainly, the minimum remaining time described above is merely an example. If an MSDU of an SCS stream corresponding to the minimum remaining time has been discarded after the transmitting end sends the delay status report and in a period of time of sending the SCS stream, the minimum remaining time may be replaced with other remaining time, for example, second minimum remaining time. It may be understood that the second minimum remaining time herein is described relative to the minimum remaining time.

It should be noted that, because one TID may correspond to a plurality of traffic streams, and delay bounds of the plurality of traffic streams may be different, the minimum remaining time may not be of the 1^{st} data packet in the transmit queue of the TID.

For example, a format of the A-control field may be shown in Table 2.

**Table 2**

| TID | Minimum remaining time for discard | Expected size of a transmit buffer |
|---|---|---|
| 4 bits | x bits | y bits |

When minimum remaining time for discard is set to 0, it indicates that an MSDU in the transmit queue of the TID is already discarded. A length of minimum remaining time for discard in the A-control field is not limited in this embodiment of this application, and x in Table 2 may be a positive integer. The expected size of a transmit buffer (buffer) in Table 2 may indicate an expected resource, and y may be a positive integer. Values of x and y are not limited in this embodiment of this application.

Optionally, the delay status report may indicate time at which discard occurs in the transmit queue of the corresponding TID. For example, the time at which the discard occurs may include earliest time at which the discard occurs, or a minimum time synchronization function (time synchronization function, TSF) value existing when the discard occurs. The receiving end may learn, by using the time at which the discard occurs, that a packet in the transmit queue of the transmitting end is already discarded. Therefore, the receiving end may trigger, by using the trigger frame, the transmitting end to send, in time, the MSDU in the transmit queue of the corresponding TID.

It should be noted that Implementation 2 in this embodiment of this application may be combined with FIG. 4, or may be an independent embodiment. For example, the foregoing delay status report may be a separate embodiment, or the delay status report and the trigger frame are combined into an embodiment. Examples are not enumerated in this embodiment of this application. For example, related descriptions of the delay status report in this embodiment of this application may be understood as a method for determining, by the receiving end based on the delay status report, that the transmitting end sends the MSDU by using the trigger frame, or a method for sending, by the transmitting end, the MSDU based on the delay status report. It may be understood that the transmitting end in the method shown herein is merely an example. For example, the embodiment combining the delay status report and the trigger frame may be applied to the transmitting end and the receiving end. For specific descriptions, refer to Implementation 2.

Implementation 1 and Implementation 2 may be parallel technical solutions. For example, the STA establishes the SCS stream based on the SCS mechanism. For another example, the STA sends an uplink MSDU based on the trigger frame sent by the AP. Alternatively, Implementation 1 and Implementation 2 may be combined. For example, after establishing the SCS stream based on the SCS mechanism, the STA sends the delay status report and receives the trigger frame. Details are not described herein again. In other words, the transmitting end sends the SCS request, and correspondingly, the receiving end receives the SCS request; and the receiving end sends the SCS response, and correspondingly, the transmitting end receives the SCS response. The transmitting end sends the delay status report. Correspondingly, the receiving end receives the delay status report, and sends the trigger frame. The transmitting end receives the trigger frame, and sends the MSDU based on the trigger frame. For specific descriptions of the combination, refer to Implementation 1 and Implementation 2.

404: The receiving end sends a measurement request, and correspondingly, the transmitting end receives the measurement request.

The measurement request includes an SCSID. In other words, an identifier included in the measurement request may identify a traffic stream. Alternatively, the receiving end may request, by using the measurement request, the transmitting end to feed back QoS measurement data of a traffic stream corresponding to the identifier. Optionally, the measurement request may further include a TID of the traffic stream, and the TID of the traffic stream is any value from 0 to 7.

For example, the measurement request may include the SCSID and the TID corresponding to the SCSID. Generally, when the TID is any value from 0 to 7, a plurality of traffic streams may be allowed to correspond to a same TID. Therefore, in this embodiment of this application, the measurement request includes the SCSID, so that the transmitting end can effectively learn that the transmitting end needs to feed back QoS measurement data of the traffic stream corresponding to the SCSID. Compared with the technical solution in which the measurement request does not include the SCSID but includes the TID, a feedback granularity of a measurement report is effectively improved. In other words, compared with a measurement report at a granularity of TID, the measurement report at a granularity of traffic stream (including an SCS stream) in this embodiment of this application effectively improves a feedback granularity of the measurement report, so that the receiving end can improve QoS of a traffic stream. Especially for a low-delay service, optimization efficiency of the low-delay service is effectively improved.

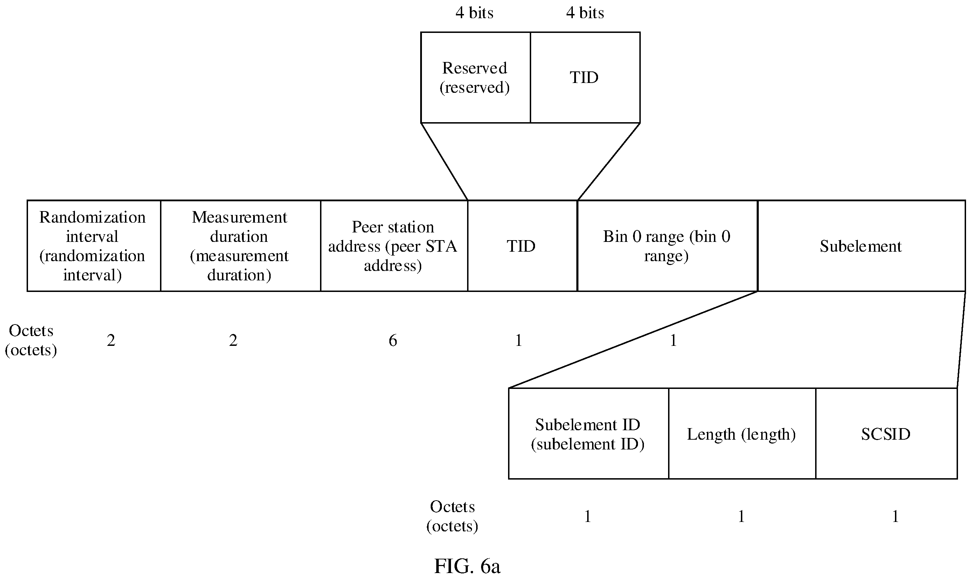

For example, the measurement request may be referred to as a measurement request frame. Generally, the measurement request may include at least one of the following fields: randomization interval (randomization interval), measurement duration (measurement duration), peer station address (peer STA address), TID, histogram (bin) 0 range, and optional subelement (optional subelement). The optional subelement in this embodiment of this application may include a subelement that indicates an SCSID. As shown in FIG. 6a, the subelement may include a subelement ID, a length, and the SCSID. The SCSID may identify a traffic stream.

The randomization interval field may indicate a maximum randomization delay at a measurement start moment. The measurement duration field may indicate measurement duration of the request. When a trigger-based measurement request is established, the field may be set to 0.

The peer station address may indicate a receiving end address of a measured MSDU. Optionally, when the receiving end is an MLD, the receiving end address may include a multi-link device MAC address (MLD MAC address). The MLD may have a plurality of auxiliary stations at the same time, and the auxiliary stations may separately work on different frequency bands/channels, and simultaneously receive and send data. Therefore, in addition to an address (link MAC address) of each auxiliary station, the MLD may have the MLD MAC address. In this embodiment of this application, when the receiving end is the multi-link device, the receiving end address is set to the multi-link MAC address. Correspondingly, the transmitting end sends the MSDU on any link between the transmitting end and the multi-link device. In other words, the transmitting end may select more links to send the MSDU. For example, the transmitting end may send the MSDU on a link with a good channel state, to improve flexibility of the transmitting end and increase a throughput.

The TID may indicate a corresponding traffic identifier of the measured MSDU. The bin 0 range may indicate a delay range of the 1^{st} bin in a transmit delay histogram.

It may be understood that a sequence and a length of each field in the measurement request shown in FIG. 6a are not limited in this embodiment of this application.

405: The transmitting end sends a measurement report, and correspondingly, the receiving end receives the measurement report.

The measurement report includes the SCSID and the QoS measurement data corresponding to the SCSID. The SCSID included in the measurement report is the same as the SCSID included in the measurement request. The measurement report may be referred to as a measurement report frame. It may be understood that the measurement request may be referred to as a category measurement request (category measurement request) or a transmit stream (transmit stream), for example, a transmit stream/category measurement request. The measurement response may be referred to as a category measurement response (category measurement report) or a transmit stream, for example, a transmit stream/category measurement report.

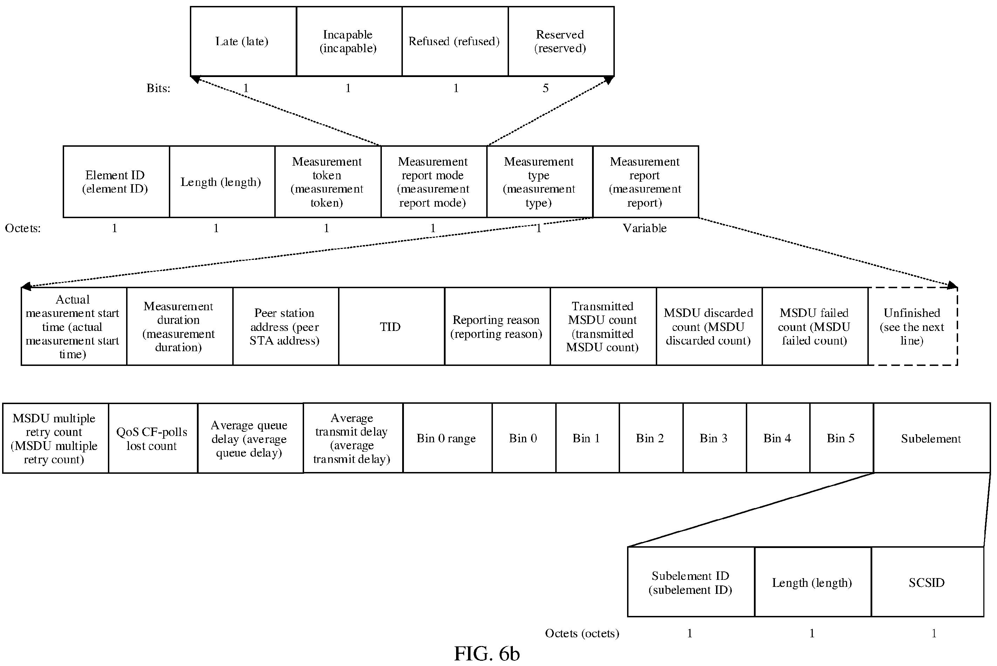

Optionally, the measurement report further includes at least one of first information and second information. The first information indicates a quantity of MSDUs that are successfully sent and acknowledged within a QoS requirement of the traffic stream, for example, transmitted MSDU count shown in FIG. 6b. The second information indicates a quantity of discarded MSDUs in the traffic stream, for example, discarded MSDU count shown in FIG. 6b.

For example, the measurement report may include at least one of the following fields:
(1) Element identifier (element ID): identifies an element that the element is.
(2) Length (length): indicates a quantity of octets occupied by the element.
(3) Measurement token (measurement token): used to match a corresponding measurement request frame and a corresponding measurement response frame.
(4) Measurement request mode (measurement report mode): indicates a measurement report mode. The measurement request mode field may include at least one of the following: late (late): indicating that the station cannot perform a measurement operation because the measurement request is received after a measurement time point of the request; incapable (incapable): indicating whether the station is incapable of generating a measurement report; and refused (refused): indicating whether the station refuses to generate a measurement report. The station herein may be understood as the transmitting end.
(5) Measurement type (measurement type): indicates whether the measurement report is a transmit stream/category measurement report or another measurement report.
(6) Measurement report (measurement report): related statistical information of the measurement report.

For example, the related statistical information of the measurement report may include at least one of the following fields:
(A) Actual measurement start time (actual measurement start time): For a triggered measurement report, a value of this field is a TSF value of a trigger moment. Optionally, when the receiving end is an MLD, because TSFs of links may be different from each other, the actual measurement start time field may be set to a TSF value of a link through which the measurement report is sent.
(B) Measurement duration (measurement duration): In a triggered transmit stream/category measurement report, measurement is reported on a plurality of transmitted MSDUs rather than one duration. Therefore, the measurement duration is set to 0.
(C) Peer station address (Peer STA Address): indicates a receiving end address of an MSDU. For descriptions of the receiving end address, refer to the peer station address shown in FIG. 6a.

Details are not described herein again.
(D) TID: includes a TID subfield. The TID subfield indicates a traffic category (traffic category, TC) or traffic stream (traffic stream, TS) of measured traffic.
(E) Reporting reason (reporting reason): may include the following bits: average error trigger (Average Trigger): indicates that the measurement report is generated due to average error trigger; consecutive trigger (Consecutive Trigger): indicates that the measurement report is generated due to consecutive error trigger; and delay trigger (Delay Trigger): indicates that the measurement report is generated because a delay exceeds a delay threshold.
(F) Transmitted MSDU count (transmitted MSDU count): indicates a quantity of MSDUs for a traffic stream that are sent and acknowledged within a delay bound.
(G) MSDU discarded count (MSDU discarded count): indicates a quantity of MSDUs discarded for a traffic stream when a delay bound, lifetime, or quantity of retry times is exceeded.

Based on the descriptions of the transmitted MSDU count and the MSDU discarded count in this embodiment of this application, a corresponding MSDU delivery ratio may meet the following formula: MSDU delivery ratio=Transmitted MSDU count/(Transmitted MSDU count+MSDU discarded count)x100%. If the MSDU delivery ratio is smaller than a target value, the receiving end (for example, the AP MLD) may take a measure to improve current QoS of the TID or traffic stream.
(H) MSDU failed count (MSDU failed count): indicates a quantity of MSDUs that are discarded due to a quantity of retry times of a traffic stream is exceeded.
(I) MSDU multiple retry count (MSDU multiple retry count): a quantity of MSDUs that are successfully transmitted and retransmitted for more than once.
(J) QoS contention free (contention free, CF)-polls frame lost count (QoS CF-polls Lost Count): a quantity of times that a CF-polls frame is lost.
(K) Average queue delay (average queue delay): A queue delay is time elapsed since the MAC receives the MSDU until the MSDU starts to be transmitted on an air interface.
(L) Average transmit delay (average transmit delay): Transmission time is time elapsed since the MAC receives the MSDU until the MSDU is sent and acknowledged. Optionally, the average queue delay and the average transmit delay may be specific to a traffic stream.
(M) Bin 0 range: indicates a delay range of a first bin (Bin 0) in a transmit delay (transmit delay) histogram, and is denoted as B0.
(N) Bin 0: a quantity of MSDUs whose delays fall in 0<=Delay<B0.
(O) Bin i: a quantity of MSDUs whose delays fall in 2^(i-1)*B0<=Delay<2^i*B0, where i may be an integer, for example, i may be less than or equal to 4 (only an example).
(P) Subelement: As shown in FIG. 6b, the subelement may include a subelement ID, a length, and an SCSID. The SCSID may identify an SCS stream. The SCSID is set to a non-zero value.

It may be understood that a sequence and a length of each field in the measurement request shown in FIG. 6b are not limited in this embodiment of this application.

Optionally, both the measurement request and the measurement report may carry one SCSID. In other words, the measurement request is used to request QoS measurement data of one SCSID, and the measurement report is used to feed back the QoS measurement data corresponding to the SCSID included in the measurement request. Optionally, the measurement request and the measurement report may further correspond to a plurality of SCSIDs. For example, the measurement request may include a plurality of subelements, and each subelement may correspond to one SCSID. Correspondingly, the measurement report may include a plurality of measurement report fields, and each measurement report field may correspond to one SCSID. For example, a sequence of the SCSIDs corresponding to the plurality of subelements in the measurement request may be the same as a sequence of the SCSIDs corresponding to the plurality of measurement report fields in the measurement report.

It should be noted that the measurement request and the measurement response in this embodiment of this application may be an embodiment, or the measurement request, the measurement response, and the interface information may be combined into an embodiment, or the measurement request, the measurement response, and the SCS mechanism are combined into an embodiment, or the measurement request, the measurement response, the delay status report, and the trigger frame are combined into an embodiment, or the measurement request, the measurement response, the SCS request, the SCS response, and the interface information are combined into an embodiment, or the measurement request, the measurement response, the SCS request, the SCS response, the interface information, the delay status report, and the trigger frame are combined into an embodiment. For specific descriptions of embodiments described herein, refer to the foregoing descriptions. Details are not described herein again.

**In** this embodiment of this application, the measurement request and the measurement report include the identifier of the SCS stream, so that both communication parties can effectively learn of the SCS stream for which the measurement request and the measurement report are sent, to effectively improve a feedback granularity of the measurement report. The receiving end may effectively optimize QoS of an SCS stream based on QoS that is of the SCS stream and that is indicated by the measurement report, to perform targeted optimization on the QoS of the SCS stream. This not only improves optimization efficiency, but also effectively improves the QoS of the SCS stream.

A communication apparatus provided in an embodiment of this application is described below.

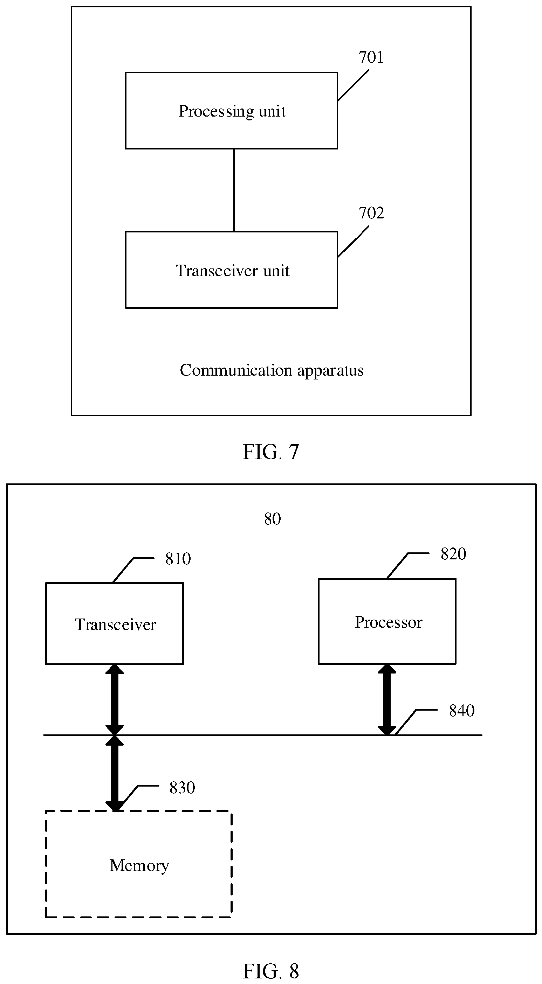

**In** this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, division into the modules is an example, and is merely a logical function division. **In** actual implementation, another division manner may be used. The following describes in detail the communication apparatus in embodiments of this application with reference to FIG. 7 to FIG. 9.

FIG. 7 is a diagram of a structure of a communication apparatus according to an embodiment of this application. As shown in FIG. 7, the communication apparatus includes a processing unit 701 and a transceiver unit 702.

In some embodiments of this application, the communication apparatus may be the transmitting end described above or a chip, and the chip may be disposed in the transmitting end. That is, the communication apparatus may be configured to perform the steps, the functions, or the like performed by the transmitting end in the foregoing method embodiments (including FIG. 4).

The transceiver unit 702 is configured to receive a measurement request, and send a measurement report.

For example, the transceiver unit 702 may be configured to send the measurement report by using the processing unit 701. For example, the processing unit 701 may be configured to determine the measurement report, and then send the measurement report through the transceiver unit 702.

For example, after the transceiver unit 702 receives the measurement request, the processing unit 701 may further parse or process the measurement request.

In a possible implementation, the processing unit 701 is further configured to perform packet discarding based on an SCSID and a QoS requirement of the SCSID.

In a possible implementation, the transceiver unit 702 is further configured to send an SCS request.

In a possible implementation, the transceiver unit 702 is further configured to send a delay status report and receive a trigger frame; and the processing unit 701 is further configured to send, based on the trigger frame, an MSDU in a transmit queue of a TID.

In some other embodiments of this application, the communication apparatus may be the receiving end described above or a chip, and the chip may be disposed in the receiving end. That is, the communication apparatus may be configured to perform the steps, the functions, or the like performed by the receiving end in the foregoing method embodiments (including FIG. 4).

The transceiver unit 702 is configured to send a measurement request and receive a measurement report.

It may be understood that the processing unit 701 may be configured to: determine the measurement request, and then send the measurement request through the transceiver unit 702. For example, the processing unit 701 is further configured to process the measurement report.

In a possible implementation, the transceiver unit 702 is further configured to receive an SCS request.

In a possible implementation, the transceiver unit 702 is further configured to: receive a delay status report, and send a trigger frame.

It may be understood that the specific descriptions of the transceiver unit and the processing unit described in this embodiment of this application are merely examples. For specific functions, steps, or the like performed by the transceiver unit and the processing unit, refer to the foregoing method embodiments. Details are not described herein again.

In the foregoing embodiments, for descriptions of the SCSID, the QoS requirement, the TID, the traffic stream, the MSDU, the delay status report, the measurement request, and the measurement response, refer to the descriptions in the foregoing method embodiments. Details are not described herein again.

The foregoing describes the communication apparatus in embodiments of this application. The following describes possible product forms of the communication apparatus. It should be understood that a product in any form that has a function of the communication apparatus in FIG. 7 falls within the protection scope of embodiments of this application. It should be further understood that the following descriptions are merely examples, and the product form of the communication apparatus in embodiments of this application is not limited thereto.

In a possible implementation, in the communication apparatus shown in FIG. 7, the processing unit 701 may be one or more processors. The transceiver unit 702 may be a transceiver. Alternatively, the transceiver unit 702 may be a sending unit and a receiving unit. The sending unit may be a transmitter, the receiving unit may be a receiver, and the sending unit and the receiving unit are integrated into one component, for example, a transceiver. In this embodiment of this application, the processor and the transceiver may be coupled, or the like. A manner of connection between the processor and the transceiver is not limited in this embodiment of this application. In a process of performing the foregoing method, a process of sending information in the foregoing method may be understood as a process of outputting the information by the processor. When outputting the foregoing information, the processor outputs the foregoing information to a transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information to the processor. Further, after the transceiver receives the information, other processing may need to be performed on the information, and then processed information is input into the processor.

As shown in FIG. 8, a communication apparatus 80 includes one or more processors 820 and a transceiver 810.

In some embodiments of this application, the communication apparatus may be configured to perform the steps, the functions, or the like performed by the transmitting end in the foregoing method embodiments (including FIG. 4).

The transceiver 810 is configured to receive a measurement request, and send a measurement report.

For example, the transceiver 810 may be configured to send the measurement report by using the processor 820. For example, the processor 820 may be configured to determine the measurement report, and then send the measurement report through the transceiver 810.

For example, after the transceiver 810 receives the measurement request, the processor 820 may further parse or process the measurement request.

In a possible implementation, the processor 820 is further configured to perform packet discarding based on an SCSID and a QoS requirement of the SCSID.

In a possible implementation, the transceiver 810 is further configured to send an SCS request.

In a possible implementation, the transceiver 810 is further configured to send a delay status report and receive a trigger frame; and the processor 820 is further configured to send, based on the trigger frame, an MSDU in a transmit queue of a TID.

In some other embodiments of this application, the communication apparatus may be configured to perform the steps, the functions, or the like performed by the receiving end in the foregoing method embodiments (including FIG. 4).

The transceiver 810 is configured to send a measurement request and receive a measurement report.

It may be understood that the processor 820 may be configured to: determine the measurement request, and then send the measurement request through the transceiver 810. For example, the processor 820 is further configured to process the measurement report.

In a possible implementation, the transceiver 810 is further configured to receive an SCS request.

In a possible implementation, the transceiver 810 is further configured to: receive a delay status report, and send a trigger frame.

It may be understood that specific descriptions of the transceiver and the processor described in this embodiment of this application are merely examples. For specific functions, steps, or the like performed by the transceiver and the processor, refer to the foregoing method embodiments. Details are not described herein again.

In the foregoing embodiments, for descriptions of the SCSID, the QoS requirement, the TID, the traffic stream, the MSDU, the delay status report, the measurement request, and the measurement response, refer to the descriptions in the foregoing method embodiments. Details are not described herein again.

In each implementation of the communication apparatus shown in FIG. 8, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 80 may further include one or more memories 830, configured to store program instructions, data, and/or the like. The memory 830 is coupled to the processor 820. The coupling in this embodiment of this application may be an indirect coupling or a communication connection between apparatuses, units, or modules in an electrical form, a mechanical form, or another form, and is used for information exchange between the apparatuses, the units, or the modules. The processor 820 may cooperate with the memory 830. The processor 820 may execute the program instructions stored in the memory 830. Optionally, at least one of the one or more memories may be included in the processor.

In this embodiment of this application, a specific connection medium between the transceiver 810, the processor 820, and the memory 830 is not limited. In this embodiment of this application, in FIG. 8, the memory 830, the processor 820, and the transceiver 810 are connected to each other by using a bus 840. The bus is represented by using a thick line in FIG. 8. A manner of connection between other components is only schematically described, but is not used as a limitation. The bus may be classified into an address bus, a data bus, a control bus, and the like. For ease of representation, only one thick line is for representing the bus in FIG. 8, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus in this application). However, this application is not limited thereto. The memory in embodiments of this application may alternatively be a circuit or any other apparatus that can implement a storage function, and is configured to store the program instructions and/or the data.

For example, the processor 820 is mainly configured to process a communication protocol and communication data, control the entire communication apparatus, execute a software program, and process data of the software program. The memory 830 is mainly configured to store the software program and the data. The transceiver 810 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 820 may read the software program in the memory 830, interpret and execute instructions of the software program, and process the data of the software program. When data needs to be sent wirelessly, the processor 820 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave via the antenna. When data is sent to the communication apparatus, the radio frequency circuit receives a radio frequency signal via the antenna, converts the radio frequency signal into a baseband signal, and outputs the baseband signal to the processor 820. The processor 820 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus described in this embodiment of this application may further have more components than those in FIG. 8, and the like. This is not limited in this embodiment of this application. The methods performed by the processor and the transceiver are merely examples. For specific steps performed by the processor and the transceiver, refer to the methods described above.

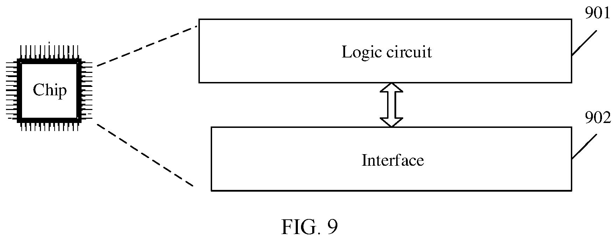

In another possible implementation, in the communication apparatus shown in FIG. 7, the processing unit 701 may be one or more logic circuits. The transceiver unit 702 may be an input/output interface that is also referred to as a communication interface, an interface circuit, an interface, or the like. Alternatively, the transceiver unit 702 may be a sending unit and a receiving unit, where the sending unit may be an output interface, the receiving unit may be an input interface, and the sending unit and the receiving unit are integrated into one unit, for example, an input/output interface. As shown in FIG. 9, the communication apparatus shown in FIG. 9 includes a logic circuit 901 and an interface 902. In other words, the processing unit 701 may be implemented by using the logic circuit 901, and the transceiver unit 702 may be implemented by using the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 9 shows an example in which the communication apparatus is a chip. The chip includes the logic circuit 901 and the interface 902.

In this embodiment of this application, the logic circuit and the interface may be coupled to each other. A specific manner of connection between the logic circuit and the interface is not limited in this embodiment of this application.

In some embodiments of this application, the communication apparatus may be configured to perform the steps, the functions, or the like performed by the transmitting end in the foregoing method embodiments (including FIG. 4).

The logic circuit 901 is configured to input a measurement request through the interface 902, and output a measurement report through the interface 902.

Optionally, the logic circuit is specifically configured to: when the measurement request is input through the interface, parse the measurement request. Optionally, the logic circuit is configured to: determine the measurement report based on the measurement request, and output the measurement report through the interface.

In a possible implementation, the logic circuit 901 is further configured to perform packet discarding based on an identifier of an SCS stream and a QoS requirement of the SCS stream.

In a possible implementation, the interface 902 is further configured to output an SCS request.

Optionally, the logic circuit is further configured to: determine the SCS request, and output the SCS request through the interface.

In a possible implementation, the interface 902 is further configured to: output a delay status report, and input a trigger frame; and the logic circuit 901 is further configured to send, based on the trigger frame, an MSDU in a transmit queue of a TID.

In some other embodiments of this application, the communication apparatus may be configured to perform the steps, the functions, or the like performed by the receiving end in the foregoing method embodiments (including FIG. 4).

The logic circuit 901 is configured to output a measurement request through the interface. The interface 902 is configured to input a measurement report.

In a possible implementation, the interface 902 is further configured to input a delay status report and output a trigger frame.

In a possible implementation, the interface 902 is further configured to input an SCS request.

It may be understood that specific descriptions of the logic circuit and the interface in this embodiment of this application are merely examples. For specific functions, steps, or the like performed by the logic circuit and the interface, refer to the foregoing method embodiments. Details are not described herein again.

In the foregoing embodiments, for descriptions of the SCSID, the QoS requirement, the TID, the traffic stream, the MSDU, the delay status report, the measurement request, and the measurement response, refer to the descriptions in the foregoing method embodiments. Details are not described herein again.

It may be understood that the communication apparatus described in this embodiment of this application may implement the methods provided in embodiments of this application in a form of hardware, or may implement the methods provided in embodiments of this application in a form of software. This is not limited in this embodiment of this application.

An embodiment of this application further provides a wireless communication system. The wireless communication system includes a transmitting end and a receiving end. The transmitting end and the receiving end may be configured to perform the method in any one of the foregoing embodiments (as shown in FIG. 4).

In addition, this application further provides a computer program. The computer program is used to implement operations and/or processing performed by the transmitting end in the methods provided in this application.

This application further provides a computer program. The computer program is used to implement operations and/or processing performed by the receiving end in the methods provided in this application.

This application further provides a computer-readable storage medium. The computer-readable storage medium stores computer code. When the computer code is run on a computer, the computer is enabled to perform operations and/or processing performed by the transmitting end in the methods provided in this application.

This application further provides a computer-readable storage medium. The computer-readable storage medium stores computer code. When the computer code is run on a computer, the computer is enabled to perform operations and/or processing performed by the receiving end in the methods provided in this application.

This application further provides a computer program product. The computer program product includes computer code or a computer program. When the computer code or the computer program is run on a computer, operations and/or processing performed by the transmitting end in the methods provided in this application are/is performed.

This application further provides a computer program product. The computer program product includes computer code or a computer program. When the computer code or the computer program is run on a computer, operations and/or processing performed by the receiving end in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A stream classification service-based communication method, wherein the method comprises:
receiving a measurement request, wherein the measurement request comprises an identifier of a stream classification service SCS stream; and
sending a measurement report, wherein the measurement report comprises the identifier of the SCS stream and quality of service QoS measurement data of the SCS stream.

2. The method according to claim 1, wherein when a receiving end of the measurement report is a multi-link device MLD, the measurement request comprises an MLD medium access control MAC address.

3. The method according to claim 1 or 2, wherein
information about an interface between a logic link control LLC layer and a MAC layer comprises the identifier of the SCS stream.

4. The method according to any one of claims 1 to 3, wherein the method further comprises:
performing, by the transmitting end, packet discarding based on the identifier of the SCS stream and a QoS requirement of the SCS stream.

5. The method according to any one of claims 1 to 4, wherein the method further comprises:
sending an SCS request, wherein the SCS request comprises the identifier of the SCS stream and the QoS requirement of the SCS stream.

6. The method according to claim 4 or 5, wherein the QoS requirement comprises a delay bound and a MAC service data unit MSDU lifetime.

7. The method according to any one of claims 1 to 6, wherein the method further comprises:
sending a delay status report, wherein the delay status report indicates remaining time for discard of an MSDU in a transmit queue of a TID corresponding to the SCS stream; and
receiving a trigger frame, and sending, based on the trigger frame, a plurality of SCS streams corresponding to the TID.

8. The method according to any one of claims 1 to 7, wherein the measurement request further comprises a traffic identifier TID of the SCS stream, and the TID of the SCS stream is any value from 0 to 7.

9. The method according to any one of claims 1 to 8, wherein the measurement report further comprises at least one of first information and second information, the first information indicates a quantity of MSDUs that are successfully sent and acknowledged within the QoS requirement of the SCS stream, and the second information indicates a quantity of discarded MSDUs in the SCS stream.

10. A stream classification service-based communication method, wherein the method comprises:
sending a measurement request, wherein the measurement request comprises an identifier of a stream classification service SCS; and
receiving a measurement report, wherein the measurement report comprises the identifier of the SCS stream and quality of service QoS measurement data of the SCS stream.

11. The method according to claim 10, wherein when a receiving end of the measurement report is a multi-link device MLD, the measurement request comprises an MLD medium access control MAC address.

12. The method according to claim 10 or 11, wherein the method further comprises:
receiving a delay status report, wherein the delay status report indicates remaining time for discard of an MSDU in a transmit queue of a TID corresponding to the SCS stream; and
sending a trigger frame based on the delay status report.

13. The method according to any one of claims 10 to 12, wherein the measurement request further comprises a traffic identifier TID of the SCS stream, and the traffic identifier TID of the SCS stream is any value from 0 to 7.

14. The method according to any one of claims 10 to 13, wherein the measurement report further comprises at least one of first information and second information, the first information indicates a quantity of MAC service data units MSDUs that are successfully sent and acknowledged within the QoS requirement of the SCS stream, and the second information indicates a quantity of discarded MSDUs in the SCS stream.

15. A communication apparatus, comprising a unit configured to perform the method according to any one of claims 1 to 14.

16. A communication apparatus, comprising a processor and a memory, wherein
the memory is configured to store instructions; and
the processor is configured to execute the instructions, to perform the method according to any one of claims 1 to 14.

17. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 14 is performed.

18. A computer-readable storage medium, wherein the computer-readable storage medium is configured to store a computer program, and when the computer program is executed, the method according to any one of claims 1 to 14 is performed.

19. A computer program, wherein when the computer program is executed, the method according to any one of claims 1 to 14 is performed.

20. A communication system, wherein the communication system comprises a transmitting end and a receiving end, the transmitting end is configured to perform the method according to any one of claims 1 to 9, and the receiving end is configured to perform the method according to any one of claims 10 to 14.
